**Europäisches Patentamt**

(19) **European Patent Office**

**Office européen des brevets**

(11) Veröffentlichungsnummer: **0 027 256**

**A1**

(12) # EUROPÄISCHE PATENTANMELDUNG

(21) Anmeldenummer: **80106111.0**

(51) Int. Cl.³: **G 01 N 27/28**

(22) Anmeldetag: **08.10.80**

(30) Priorität: **11.10.79 AT 6631/79**

(43) Veröffentlichungstag der Anmeldung:
**22.04.81 Patentblatt 81/16**

(84) Benannte Vertragsstaaten:
**AT BE CH DE FR GB IT LI LU NL SE**

(71) Anmelder: **Haberich, Franz Josef, Prof. Dr.**
**Frankfurter Strasse 39**
**D-3550 Marburg(DE)**

(72) Erfinder: **Haberich, Franz Josef, Prof. Dr.**
**Frankfurter Strasse 39**
**D-3550 Marburg(DE)**

(74) Vertreter: **Schmidt-Evers, Jürgen et al,**
**Patentanwälte Dipl.-Ing.H.Mitscherlich**
**Dipl.-Ing.K.Gunschmann Dr.rer.nat.W.Körber**
**Dipl.-Ing.J.Schmidt-Evers**
**Steinsdorfstrasse 10 D-8000 München 22(DE)**

(54) **Messanordnung zur polarographischen und oder potentiometrischen Analyse.**

(57) Diese Meßanordnung setzt sich aus einem aus Kunststoff bestehenden Aufnahmeblock (1) und Elektrodenkörpern (2) zusammen. Der Aufnahmeblock weist dazu seitliche Einsteköffnungen (5) auf, die durch einen Verbindungskanal (23) miteinander verbunden sind. Die ebenfalls aus Kunststoff bestehenden Elektrodenkörper (2) weisen Ansätze (6) auf, die formschlüssig in die Einstecköffnungen (5) einsteckbar sind. In den Ansätzen (6) sind Durchflußkanäle (7) vorgesehen, die die Meßkammern der Elektrodenkörper bilden. Diese Durchflußkanäle (7) fluchten mit dem Verbindungskanal (23) in dem Aufnahmeblock (1). Zur Erzielung einer möglichst laminaren Strömung der Meßflüssigkeit haben die Durchflußkanäle (7) und der Verbindungskanal (23) vorzugsweise den gleichen Querschnitt und sind mit einer glatten Innenauskleidung versehen.

./...

EP 0 027 256 A1

FIG. 1

Meßanordnung zur polarographischen und/oder
potentiometrischen Analyse

----------------------------------------------

Die Erfindung betrifft eine Meßanordnung zur polarographischen und/oder potentiometrischen Analyse mit
einem Rahmen, in dem mindestens ein Meßelektrodenkörper sowie ein Bezugselektrodenkörper austauschbar befestigt und in Reihe angeordnet sind, wobei
jeder Elektrodenkörper mit jeweils einer Meßkammer
in Verbindung steht, und wobei die Meßkammern zwecks
Durchleitung der Meßflüssigkeit durch einen Verbindungskanal miteinander verbunden sind.

Eine Meßanordnung der vorstehend beschriebenen Art
ist bekannt (Zeitschrift "Biomedizinische Technik"
1977, Heft 1o, Seite 235). Bei dieser bekannten
Meßanordnung sind mehrere Isolierkörper aus Acrylglas in einem Metallrahmen hintereinander angeordnet.
Die Isolierkörper sind auf gegenüberliegenden Seiten
mit Meßkammern bildenden Ausnehmungen versehen. Die
Ausnehmungen sind durch einen rinnenförmigen Verbindungskanal miteinander verbunden. Der Metallrahmen gestattet das Einschrauben von Elektrodenkörpern in zwei gegenüberliegenden Reihen, derart, daß die Elektrodenkörper die Meßkammern nach außen abschließen und mit der durch sie hindurch strömenden Meßflüssigkeit in Verbindung stehen. Die beiden Elektrodenkörper-Reihen können separat oder in hintereinandergeschalter Form betrieben werden. Für die Zu- und Ableitung von Meßflüssigkeit sowie für die Hintereinanderschaltung sind Schläuche vorgesehen.

Nachteilig bei der bekannten Meßanordnung ist, daß der Querschnitt der Meßkammern und Verbindungskanäle unterschiedlich ist, so daß die Meßflüssigkeit an den Übergangsstellen Ecken und Kanten umströmen muß und dadurch in Turbulenz gerät. Dies bringt dann, wenn die Meßflüssigkeit Blut ist, die Gefahr einer Thrombenbildung mit sich.

Hier will die Erfindung Abhilfe schaffen. Die Erfindung, wie sie in den Ansprüchen gekennzeichnet ist, löst die Aufgabe, eine Meßanordnung der eingangs beschriebenen Art so zu gestalten, daß ein laminares Durchströmen der Meßkammern und des Verbindungskanales durch die Meßflüssigkeit gewährleistet ist.

Dies wird im wesentlichen dadurch erreicht, daß ein die Meßkammer bildender Durchflußkanal nunmehr Bestandteil des Elektrodenkörpers selbst ist. Da die Durchflußkanäle und der Verbindungskanal fluchtend angeordnet sind und gleichen Durchmesser haben oder - falls nicht - mit strömungsleitenden Übergängen versehen sind und außerdem eine glatte Innenauskleidung aufweisen, wird, wenn die Meßflüssigkeit Blut ist, die Gefahr einer Thrombenbildung vermieden. Vorteilhaft ist ferner die Vereinfachung der Meßanordnung und die Vereinheitlichung der Konstruktion der Meß- elektrodenkörper. Letztere bilden praktisch Steck- module, die in einfacher Weise ausgetauscht werden können. Die vereinfachte Konstruktion ermöglicht ferner die Miniaturisierung der Elektrodenkörper sowie ihre einfache Sterilisierung, wodurch die Meßanordnung in der experimentellen Physiologie und der operatieven Medizin direkt am Krankenbett eingesetzt werden kann.

Im folgenden wird die Erfindung anhand von Ausführungsbeispielen näher erläutert. Es zeigt:

Figur 1 den Aufnahmeblock und die Elektrodenkörper in perspektivischer teilweise aufgebrochener Darstellung;

Figur 2 einen Schnitt durch den Aufnahmeblock sowie die ungeschnittenen teilweise eingesteckten Elektrodenkörper;

Figur 3 ein Meßelektrodenelement;

Figur 4 einen Schnitt durch einen Meßelektrodenkörper;

Figur 5 eine andere teilweise geschnittene Ansicht des in Figur 4 gezeigten Meßelektrodenkörpers;

Figur 6 eine vergrößerte Schnittdarstellung des unteren Teiles eines Meßelektrodenkörpers mit eingestecktem Meßelektrodenelement;

Figur 7 einen Bezugselektrodenkörper im Schnitt sowie ein Bezugselektrodenelement;

Figur 8 eine vergrößerte Schnittdarstellung eines Bezugselektrodenkörpers mit eingestecktem Bezugselektrodenelement;

Figur 9 eine vergrößerte Schnittdarstellung durch den unteren Teil einer alternativen Ausführungsform des Bezugselektrodenkörpers mit eingestecktem Bezugselektrodenelement und

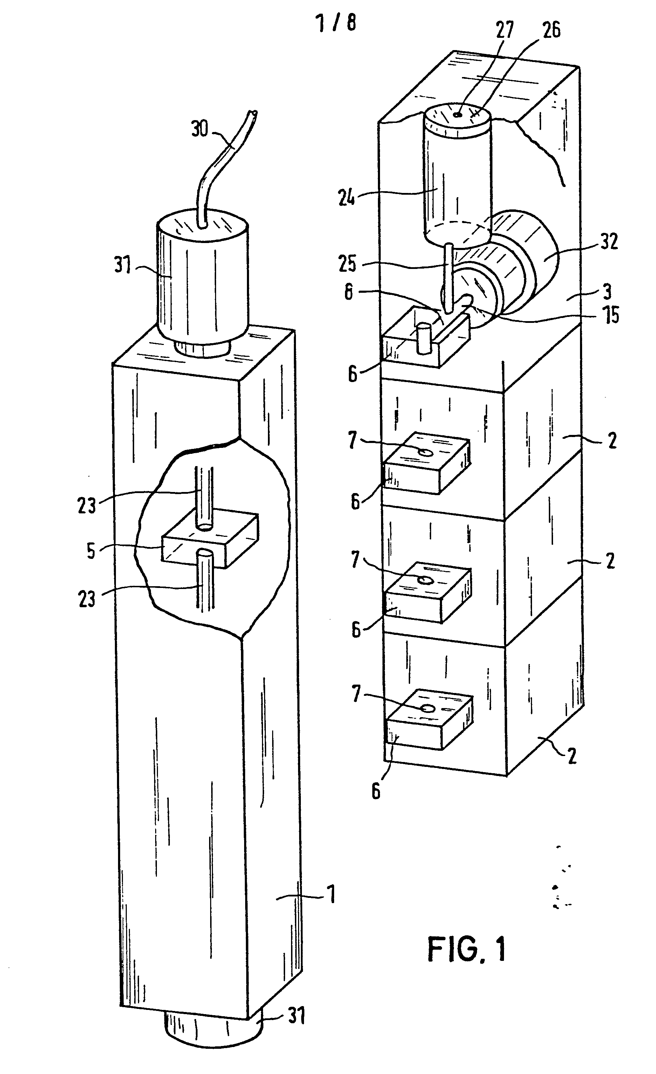

Figur 1o eine Schnittdarstellung durch den unteren Teil einer weiteren alternativen Ausführungsform des Bezugselektrodenkörpers mit eingestecktem Bezugselektrodenelement.

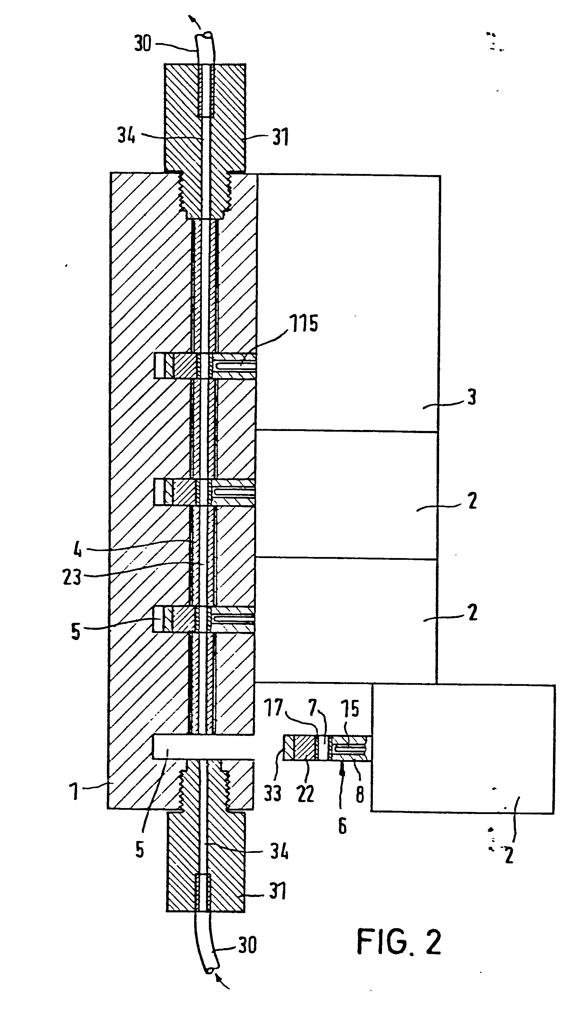

Zu der in den Figuren 1 und 2 gezeigten Meßanordnung gehört ein Aufnahmeblock 1 aus Kunststoff, der seitliche Einstecköffnungen 5 aufweist. Die Einsteck- öffnungen 5 sind durch einen Verbindungskanal 23 miteinander verbunden. Der Verbindungskanal 23 ist durch den Innenraum von Kunststoffröhrchen 4 gebildet, die in Längsrichtung schwimmend in einer im Aufnahmeblock 1 vorgesehenen Bohrung gelagert sind. Die Kunststoffröhrchen sind so lang, daß sie den Zwischenraum zwischen zwei Einstecköffnungen 5 überbrücken, oder ein klein wenig länger. In die Enden des Kunststoffblockes 1 sind Schlauchverbindungsschrauben 31 eingeschraubt. Die untere Schlauchverbindungsschraube 31 ist mit einem Zuführungsschlauch 3o und die obere Schlauchverbindungsschraube 31 mit einem Abführungs-schlauch 3o verbunden. Beide Schlauchverbindungs-schrauben 31 enthalten eine Durchflußbohrung 34, die mit dem Verbindungskanal 23 fluchtet. Die obere Schlauchverbindungsschraube 31 steht mit einem Kunststoffröhrchen 4 in Kontaktverbindung. Die untere Schlauchverbindungsschraube 31 grenzt mit ihrer Stirnfläche an die untere Einstecköffnung 5 an.

In die Einstecköffnungen 5 werden Meßelektrodenkörper 2 und ein Bezugselektrodenkörper 3 eingesteckt. Dazu weisen die Elektrodenkörper 2,3 Ansätze 6 auf, die formschlüssig in die Einstecköffnungen 5 passen. Die Pfeile an den Schläuchen 3o deuten die Durchflußrichtung der Meßflüssigkeit an. Der Bezugselektrodenkörper 3 ist in Durchflußrichtung hinter den Meßelektrodenkörpern 2 angeordnet.

Die Elektrodenkörper 2,3 werden in den Einstecköffnungen durch den Schraubdruck der Schlauchverbindungsschrauben 31 arretiert. Die untere Schlauchverbindungsschraube 31 drückt direkt gegen den Ansatz 6 des unteren Meßelektrodenkörpers 2, während die obere Schlauchverbindungsschraube 31 über die schwimmend gelagerten Röhrchen 4 seitlich auf die Ansätze der Elektrodenkörper 2,3 drückt. Wenn ein Elektrodenkörper 2,3 ausgetauscht werden soll, braucht lediglich eine Schlauchverbindungsschraube 31 leicht gelöst werden, so daß der Schraubdruck nachläßt.

Der in denFiguren 3 bis 6 genauer dargestellte Meßelektrodenkörper 2 besteht aus einem Kunststoffblock mit einer Einsenkung 32. An die Einsenkung 32 schließt sich ein Innengewinde 11 an. Am unteren Ende des Ansatzes 6 befindet sich eine zylinderschalenförmige Ausnehmung 21. Diese Ausnehmung 21 ist mit dem Innengewindebereich 11 durch eine Verbindungsbohrung 8 verbunden. In die Ausnehmung 21 ist eine Membran 9 eingelegt. Gegen die Membran 9 ist ein einen hohlzylindrischen Abschnitt aufweisendes Gegenstück 22 gelegt, das in der Ausnehmung 21 mittels einer Klebeschicht 29 eingeklebt ist. Das Gegenstück 22 enthält einen eine Meßkammer bildenden Durchflußkanal 7. Dieser ist mit einer glatten Innenauskleidung 17 versehen. Auf das Gegenstück 22 ist ferner ein Abschlußelement 33 aufgesetzt, welches ebenfalls eine hohlzylindrische Ausnehmung aufweist und sowohl an dem Gegenstück 22 als auch an dem Ansatz 6 festgeklebt ist.

In den Meßelektrodenkörper 2 wird ein Meßelektrodenelement 1o eingeführt. Zu diesem gehört ein aus Kunststoff bestehender Trägerzapfen 18 mit Gewindeansatz 12. Von dem Gewindeansatz 12 geht eine Ableitelektrode 15 aus. An der anderen Seite des Trägerzapfens 18 befindet sich ein Steckeranschluß 13. Beim Einführen des Meßelektrodenelementes 1o in den Meßelektrodenkörper 2 wird der Gewindeansatz 12 in das Innengewinde 11 eingeschraubt. Der Trägerzapfen 18 mit dem Steckeranschluß 13 findet Aufnahme in der Einsenkung 32. Der Durchmesser der Ableitelektrode 15 ist etwas geringer als der der Verbindungsbohrung 8. Im Zwischenraum befindet sich die Elektrolytlösung 14. Die Spitze 16 der Ableitelektrode 15 sitzt auf der Membran 9 auf.

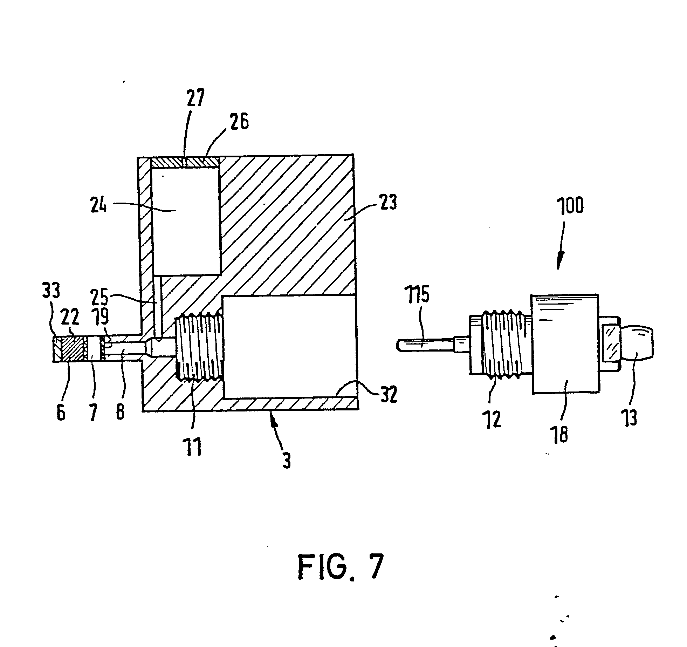

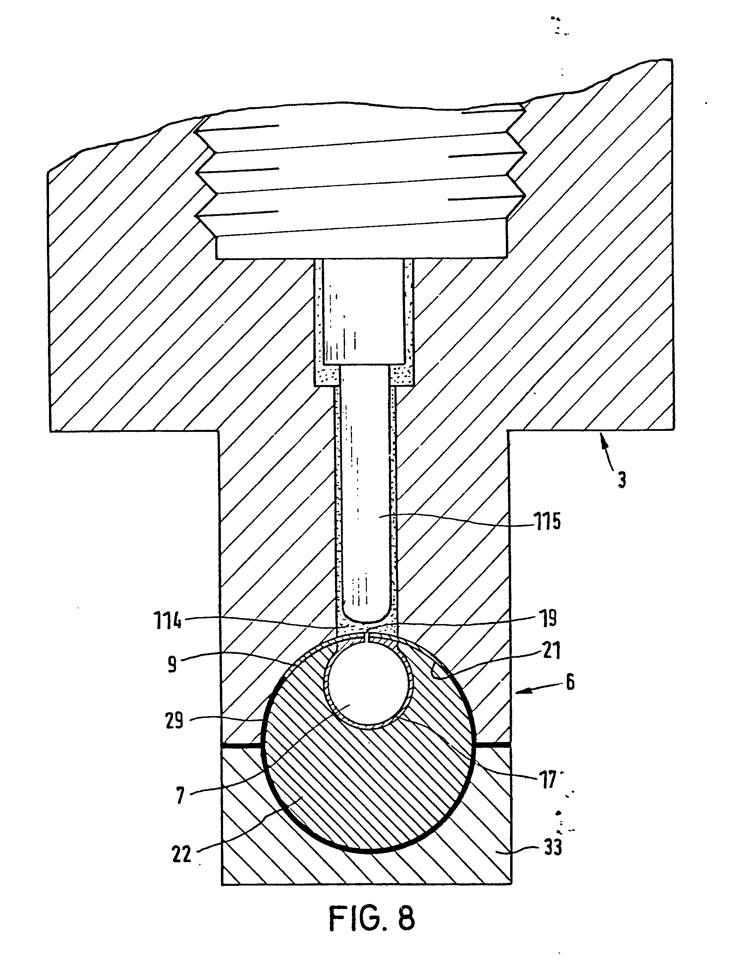

Der in den Figuren 7 und 8 gezeigte Bezugselektrodenkörper 3 sowie das Bezugselektrodenelement 1oo sind im Prinzip gleich wie der Meßelektrodenkörper 2 und das Meßelektrodenelement 1o aufgebaut. Hinzukommt hier lediglich, daß der ebenfalls aus Kunststoff bestehende Bezugselektrodenkörper 3 noch einen Vorratsbehälter 24 für die Bezugslösung 114 enthält. Dieser Vorratsbehälter 24 ist durch einen Abflußkanal 25 mit der Bohrung 8 verbunden. Ferner ist der Vorratsbehälter 24 mit einem Deckel 26 verschlossen, der ein Loch 27 enthält, durch das Luft nachströmen kann, wenn die Bezugslösung durch ein Mikroleck 19 langsam in den Durchflußkanal 7 entweicht. Das Mikroleck 19 ist eine winzige Bohrung, die sich, wie man Fig. 8 entnehmen kann, durch die Membran 9 und die Innenauskleidung 17 des Durchflußkanales 7 erstreckt. Die Ableitelektrode 115 des Bezugselektrodenelementes 1oo erstreckt sich hier nicht bis zu der Membran 16, sondern endet mit Abstand davor.

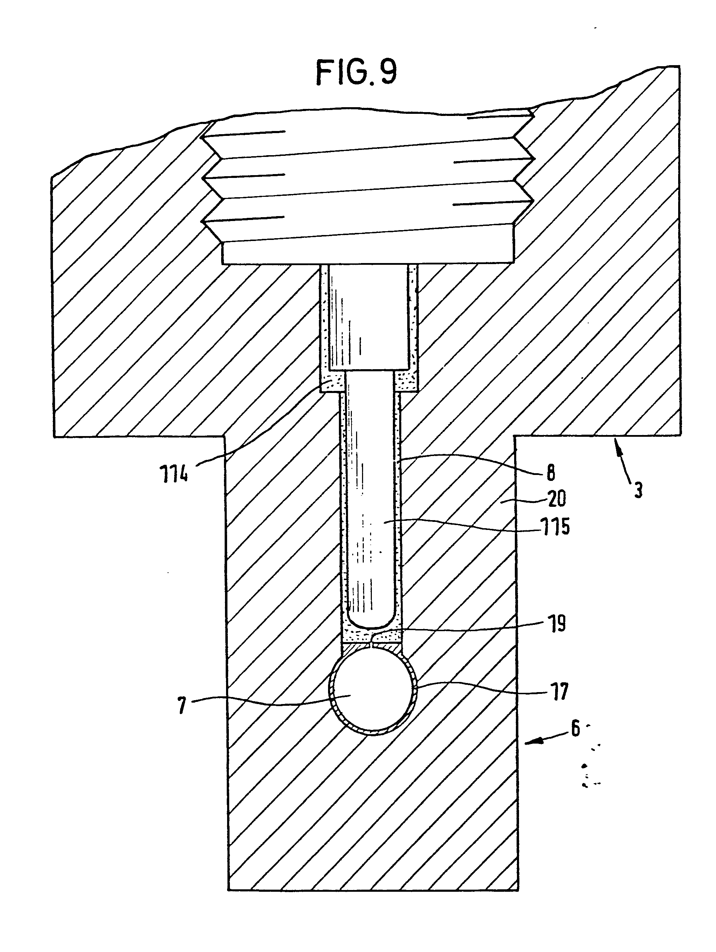

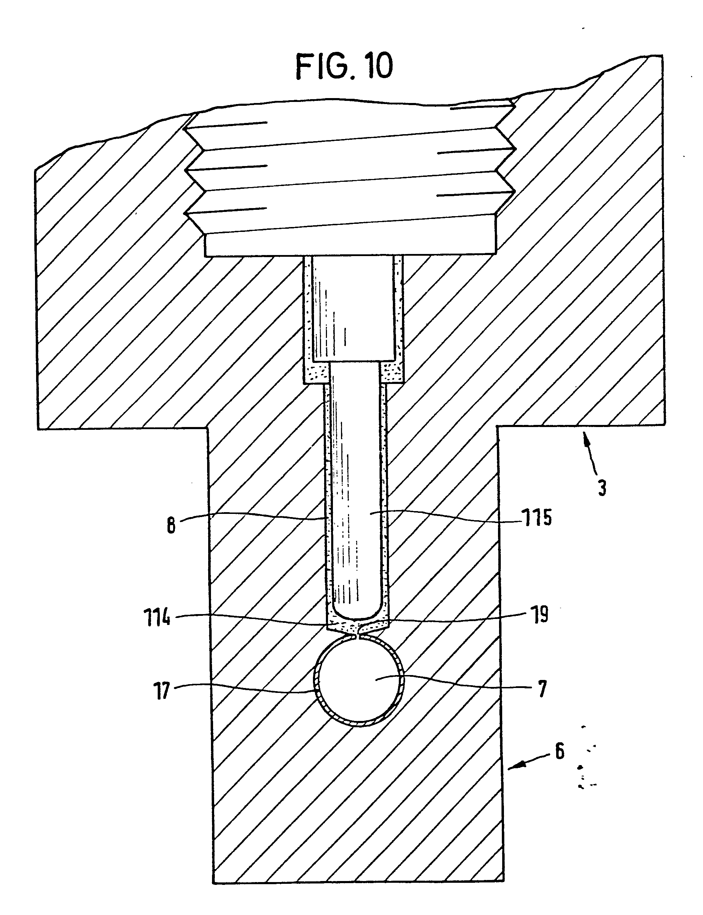

Bei der in Figur 9 gezeigten alternativen Ausführungsform ist die Membran weggelassen. Der Ansatz 6 ist hier ganzteilig ausgebildet. Das Mikroleck 19 ist allein in der glatten Innenauskleidung 17 des Durchflußkanales 7 vorgesehen.

Bei der weiteren alternativen Ausführungsform gemäß Figur 1o ist die Verbindungsbohrung 8 im Bezugselektrodenkörper 3 im Übergangsbereich zum Durchflußkanal 7 zur Bildung eines Mikrolecks 19 verengt. Die verengte Stelle ist mit einem die Eigenschaften einer Dialysemembran aufweisenden Kleber verschlossen. Die Bezugslösung 114 ist eingedickt und hat eine hohe Elektrolytkonzentration.

Das Füllen des Bezugselektrodenkörpers 3 nach Figur 1o erfolgt in folgenden Schritten: Zunächst wird der Vorratsbehälter 24 mit den eingedickten Bezugselektrolyten gefüllt. Dann wird die Einfüllöffnung beispielsweise durch Aufkleben einer Folie luftdicht verschlossen. Schließlich wird die verengte Stelle der Bohrung 8 vom Durchflußkanal 7 her mit dem Kleber verschlossen.

In der so hergestellten Form ist der Bezugselektrodenkörper 3 gemäß Figur 1o lager- und transportfähig. Wenn er in Benutzung genommen werden soll, ist es lediglich erforderlich, die Folie über der Öffnung des Vorratsbehälters 24 mit einem Loch zu versehen, damit Luft nachtreten kann. Dies kann beispielsweise durch Durchstechen der Folie mit einer Nadel erfolgen.

Als Bezugselektrolyt kommt beispielsweise Kaliumchlorid (KCl) in Frage, jedoch mit einer sehr hohen Konzentration in dem Eindickungsmittel, nämlich 3 MOL/Liter. Als Eindickungsmittel ist beispielsweise Agar-Agar geeignet. Dieses Mittel wird aus Meeresalgen gewonnen und ist ein neutrales Eindickungsmittel.

Als Kleber für die Membran kommt Cyanacrylat-Einkomponentenkleber in Betracht. Dazu eignet sich z.B. der Kleber CA11 der Firma Delo-Chemie München.

Als Folie zum Verschließen des Vorratsbehälters eignet sich Tesafilm. Die verengte Stelle am Ende der Bohrung 8 kann beispielsweise einen Durchmesser von 0,2 mm haben.

Der Durchflußkanal 7 hat bei einer praktischen Ausführungsform einen Durchmesser von ca. 2 mm. Das ergibt für jeden Elektrodenkörper ein Volumen an Meßflüssigkeit von etwa 10 μl. Dies ist sehr wenig.

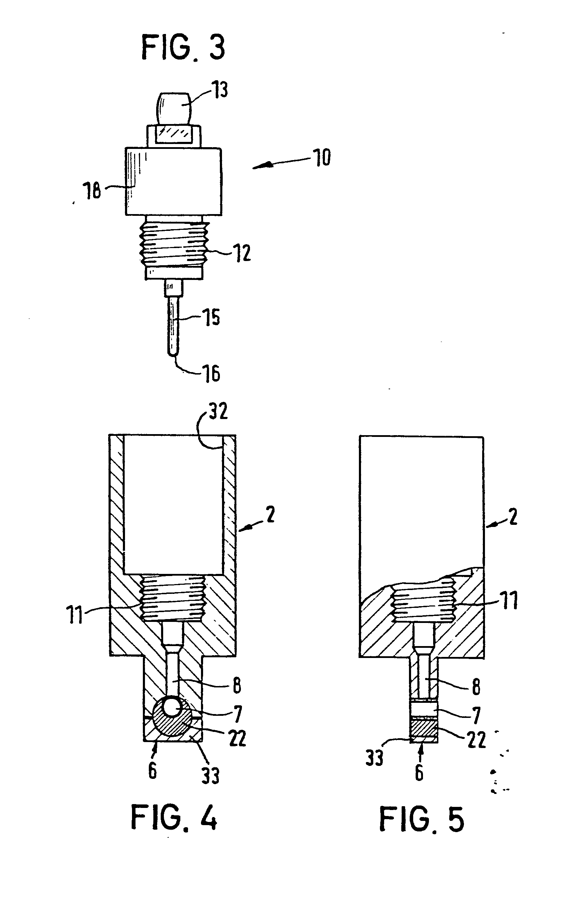

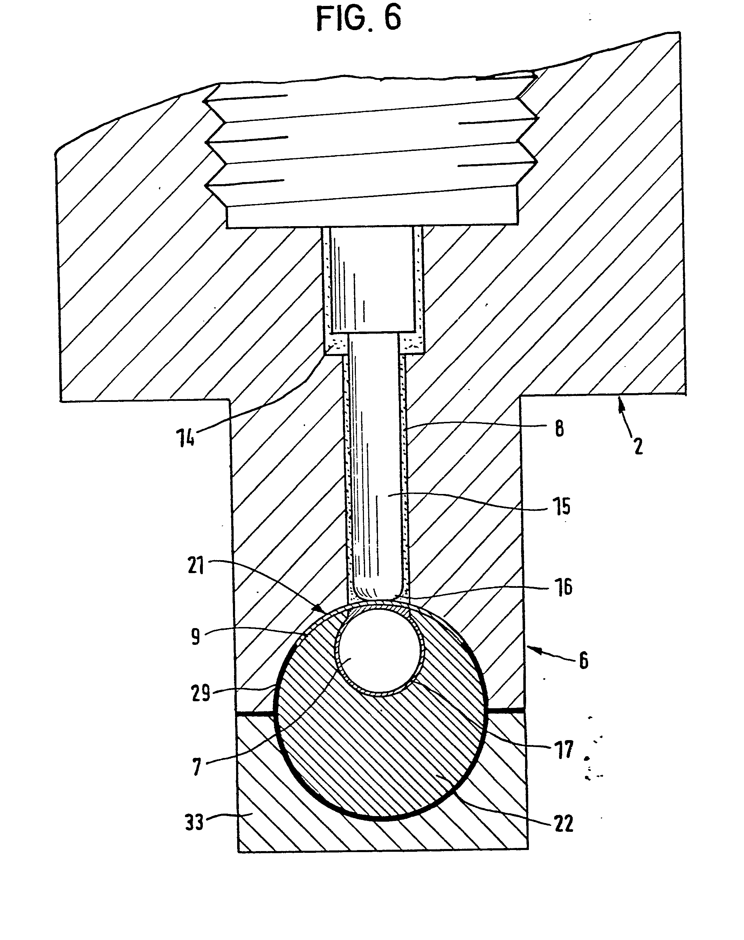

Bei einem Sauerstoff-Meßelektrodenkörper 2, wie er in den Figuren 3 bis 6 beschrieben ist, kann die Ableitelektrode 15 aus einem Platindraht bestehen, der mit einer Glasisolierschicht bedeckt ist, auf der sich eine Silberschicht befindet. Bei einem Kohlendioxyd-Meßelektrodenkörper 2 kann die Ableitelektrode 15 eine miniaturisierte pH-Elektrode sein. Wenn es sich um einen ionensensitiven Meßelektrodenkörper 2 handelt oder um einen Bezugselektrodenkörper 3 so kann als Ableitelektrode 15 ein unpolarisierbares Halbelement, z.B. aus Ag/AgCl verwendet werden.

Die Membran 9 kann bei einem Sauerstoff-Meßelektrodenkörper 2 und bei einem Kohlendioxydmeßelektrodenkörper 2 aus Polytretrafluoräthylen (PTFE) bestehen. Bei einem ionensensitiven Meßelektrodenkörper 2 kann die Membran 9 aus einer selektiven Matrix bestehen. Bei einem Bezugselektrodenkörper 3 sollte die Membran 9 aus einem hydrophilen oder einem hydrophoben Material bestehen.

ANSPRÜCHE

1) Meßanordnung zur polarographischen und/oder potentiometrischen Analyse, mit einem Rahmen, in dem mindestens ein Meßelektrodenkörper (2) sowie ein Bezugselektrodenkörper (3) austauschbar befestigt und in Reihe angeordnet sind, wobei jeder Elektrodenkörper (2,3) mit jeweils einer Meßkammer in Verbindung steht, und wobei die Meßkammern zwecks Durchleitung der Meßflüssigkeit durch einen Verbindungskanal (23) miteinander verbunden sind, dadurch gekennzeichnet, daß der Rahmen von einem Aufnahmeblock (1) gebildet ist, der mit in Reihe angeordneten Einstecköffnungen (5) für die Elektrodenkörper (2,3) versehen ist, daß die Einstecköffnungen (5) durch den Verbindungskanal (23) miteinander verbunden sind, und daß die Meßkammer für jeden Elektrodenkörper (2,3) in Form eines mit dem Verbindungskanal (23) nach dem Einstecken des betreffenden Elektrodenkörpers (2,3) in die entsprechende Einstecköffnung (5) fluchtenden Durchflußkanales (7) in dem Elektrodenkörper (2,3) vorgesehen ist.

2) Meßanordnung nach Anspruch 1, dadurch gekennzeichnet, daß die Durchflußkanäle (7) und der Verbindungskanal (23) gleichen Querschnitt oder - falls nicht - strömungsleitende Übergänge haben.

3) Meßanordnung nach Anspruch 1 oder 2, dadurch gekennzeichnet, daß der Verbindungskanal (23) und jeder Durchflußkanal (7) mit einer glatten Innenauskleidung (17) versehen ist.

4) Meßanordnung nach einem der vorhergehenden Ansprüche, dadurch gekennzeichnet, daß jeder Elektrodenkörper (2,3) mit einem an die Form der Einstecköffnungen angepaßten Ansatz (6) versehen ist, und daß der Durchflußkanal in dem Ansatz (6) vorgesehen ist.

5) Meßanordnung nach einem der vorhergehenden Ansprüche, dadurch gekennzeichnet, daß der Verbindungskanal (23) durch den Innenraum von sich zwischen den Einstecköffnungen erstreckenden und in Längsrichtung verschiebbar gelagerten Röhrchen (4) gebildet ist, und daß an den beiden Enden des Aufnahmeblockes (1) Verbindungsschrauben (31) angeordnet sind, die eine mit dem Verbindungskanal (23) fluchtende Durchflußbohrung (34) aufweisen, welche einerseits in einen Zu- bzw. Abführungsschlauch (3o) und andererseits in den Verbindungskanal (23) bzw. einen Durchflußkanal (7) mündet, und daß die eingeschraubte Stirnseite jeder der beiden Verbindungsschrauben an einem Röhrchen (4) oder dem Ansatz (6) eines Elektrodenkörpers (2,3) anliegt und durch Einschrauben dagegen preßbar ist.

6) Meßanordnung nach einem der vorhergehenden Ansprüche, dadurch gekennzeichnet, daß jeder Elektrodenkörper (2,3) einen Aufnahmeraum für ein Elektrodenelement (1o,1oo) aufweist, der aus einer Einsenkung (32 ) einer von deren Ende ausgehenden Gewindebohrung (11) und einem sich zwischen der Gewindebohrung (8) und dem Durchflußkanal (7) erstreckenden Verbindungsbohrung (8) besteht, daß das Elektrodenelement (1o;1oo) aus einem hohlen Trägerzapfen (18) mit Gewindeansatz (12), einer vom Gewindeansatz (12) ausgehenden stiftartigen Ableitelektrode (15,115) und einem am Trägerzapfen (18) befestigten Steckeranschluß (13) besteht, der mit der Ableitelektrode (15,115) elektrisch verbunden ist, daß der Gewindeansatz (12) in die Gewindebohrung (11) eingeschraubt ist, wobei die Ableitelektrode (15,115) mit Abstand zur Wand der Verbindungsbohrung (8) in diese eintaucht und der Trägerzapfen (18) in der Einsenkung (32) Platz findet, daß die Verbindungsbohrung (8) im Übergangsbereich zum Durchflußkanal (7) bei einem Meßelektrodenkörper (2) mit einer elektrodenspezifischen Schicht verschlossen ist und bei einem Bezugselektrodenkörper über ein Mikroleck (19) mit dem Durchflußkanal (7) in Verbindung steht, und daß sich im Zwischenraum zwischen der Wand der Verbindungsbohrung (8) und der Ableitelektrode (15,115) eine elektrodenspezifische Elektrolyt- bzw. Bezugslösung (14,114) befindet.

7) Meßanordnung nach Anspruch 6, dadurch gekennzeichnet, daß die elektrodenspezifische Schicht von der Innenauskleidung (17) gebildet ist.

8) Meßanordnung nach Anspruch 3 und 6, dadurch gekennzeichnet, daß die elektrodenspezifische Schicht von einer Membran (9) gebildet ist.

9) Meßanordnung nach Anspruch 3 und 8, dadurch gekennzeichnet, daß die Membran (9) in eine Ausnehmung (35) des Ansatzes (6) eingelegt ist, in die die Verbindungsbohrung (8) mündet, daß auf der der Verbindungsbohrung (8) gegenüberliegenden Seite der Membran (9) ein Gegenstück (22) angeordnet ist, das den Durchflußkanal (7) enthält, wobei dieser seitlich an die Membran (9) angrenzt, und daß das Gegenstück (22) formschlüssig an der Membran (9) und an der Ausnehmung (35) des Ansatzes (6) anliegt und an letzerem befestigt ist.

1o) Meßanordnung nach Anspruch 9, dadurch gekennzeichnet, daß das Gegenstück (22) in der Ausnehmung (35) des Ansatzes (6) eingeklebt ist.

11) Meßanordnung nach einem der Ansprüche 6 bis 1o, dadurch gekennzeichnet, daß im Bezugselektrodenkörper (3) zusätzlich ein Vorratsbehälter (24) für Bezugsflüssigkeit (114) vorgesehen ist, der mit der Verbindungsbohrung (8) durch einen Abflußkanal (25) verbunden ist, und daß der Vorratsbehälter (24) mit einem perforierten Deckel (26) verschlossen ist.

12) Meßanordnung nach Anspruch 3 und einem der Ansprüche 6 bis 11, dadurch gekennzeichnet, daß das Mikroleck (19) im Bezugselektrodenkörper (3) in der Innenauskleidung (17) vorgesehen ist.

13) Meßanordnung nach Anspruch 3 und einem der Ansprüche 8 bis 1o, dadurch gekennzeichnet, daß das Mikroleck (19) im Bezugselektrodenkörper (3) in der Innenauskleidung (17) und in der Membran vorgesehen ist.

14) Meßanordnung nach Anspruch 6, dadurch gekennzeichnet, daß die Verbindungsbohrung (8) im Bezugselektrodenkörper (3) im Übergangsbereich zum Durchflußkanal (7) zur Bildung des Mikrolecks (19) verengt ist, daß die verengte Stelle mit einem die Eigenschaften einer Dialysemembran aufweisenden Kleber verschlossen ist, und daß die Bezugslösung (114) eingedickt ist und eine hohe Elektrolytkonzentration hat.

15) Meßanordnung nach Anspruch 3 bis 6, dadurch gekennzeichnet, daß der Aufnahmeblock (1), die Elektrodenkörper (2,3) der Trägerzapfen (18) mit Gewindeansatz die Verbindungsschrauben (31) und die Röhrchen (4) aus Kunststoff bestehen.

16) Meßanordnung nach Anspruch 3, dadurch gekennzeichnet, daß die Innenauskleidung (17) aus Silikonkautschuk oder hydrophilem, neutralem Polymer besteht.

17) Meßanordnung nach Anspruch 6, dadurch gekennzeichnet, daß die Ableitelektrode (15) bei einem Sauerstoff-Meßelektrodenkörper (2) aus einem Platindraht besteht, der mit einer Glasisolierschicht bedeckt ist, auf der sich eine Silberschicht befindet, daß die Ableitelektrode (15) bei einem Kohlendioxyd-Meßelektrodenkörper (2) eine miniaturisierte pH-Elektrode ist, und daß die Ableitelektrode (5) bei einem ionensensitiven Meßelektrodenkörper (2) und bei einem Bezugselektrodenkörper (3) ein unpolarisierbares Halbelement ist.

18) Meßanordnung nach Anspruch 8, dadurch gekennzeichnet, daß die Membran (9) bei einem Sauerstoff-Meßelektrodenkörper (2) und bei einem Kohlendioxyd-Meßelektrodenkörper (2) aus Polytetrafluoräthylen besteht, daß die Membran (9) bei einem ionensensitiven Meßelektrodenkörper (2) aus einer selektiven Matrix besteht, und daß die Membran (9) bei einem Bezugselektrodenkörper (3) aus einem hydrophilen Material oder einem hydrophoben Material besteht.

0027256

FIG. 1

FIG. 2

## FIG. 3

## FIG. 4

## FIG. 5

## FIG. 6

FIG. 7

FIG. 8

0027256

/8

## FIG.9

# FIG. 10

8

115

3

114

19

17

7

6

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 2 000 297 (E. FRESENIUS CHEMISCH-PHARMAZEUTISCHE INDUSTRIE KG APPARATEBAU KG) <br><br> * Seite 3; Ansprüche * <br><br> -- | 1 |
| | CH - A - 564 770 (AVL GESELLSCHAFT FÜR VERBRENNUNGSKRAFTMASCHINEN UND MESSTECHNIK) <br><br> * Spalte 3, Zeilen 38-67; Spalte 4, Zeilen 1-18; Ansprüche * <br><br> -- | 1 |
| | DE - A - 1 498 576 (BECKMAN INSTRUMENTS) <br><br> * Figur 6; Ansprüche * <br><br> -- | 1 |
| | DE - A - 2 652 370 (E. FRESENIUS CHEMISCH-PHARMAZEUTISCHE INDUSTRIE KG APPARATEBAU KG) <br><br> * Ansprüche * <br><br> -- | 1 |
| A | DE - A - 2 514 997 (THIEDIG & CO) <br><br> * Ansprüche * <br><br> -- | 1 |
| A | US - A - 3 997 420 (E.E. BUZZA) <br><br> * Zusammenfassung; Ansprüche * <br> & DE - A - 2 212 801 <br><br> -- | 1 |
| A | US - A - 3 639 829 (K. HARNON-COURT) <br><br> ./. | 1 |

**KLASSIFIKATION DER ANMELDUNG (Int. Cl.³)**

G 01 N 27/28

**RECHERCHIERTE SACHGEBIETE (Int Cl.³)**

G 01 N 27/28
27/56

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 29-12-1980 | CALLEWAERT |

EPA form 1503.1   06.78

**0027256**

Europäisches
Patentamt

**EUROPÄISCHER RECHERCHENBERICHT**

Nummer der Anmeldung

EP 80 10 6111

-2-

| | EINSCHLÄGIGE DOKUMENTE | | KLASSIFIKATION DER ANMELDUNG (Int Cl.³) |
|---|---|---|---|
| Kategorie | Kennzeichnung des Dokuments mit Angabe, soweit erforderlich, der Maßgeblichen Teile | betrifft Anspruch | |
| | * Ansprüche * & DE - A - 1 919 654 -- | | |
| A | DE - A - 2 642 864 (CONTROL DATA CORPORATION) * Seiten 7,8; Figur 3 * ---- | 1 | |
| | | | **RECHERCHIERTE SACHGEBIETE (Int. Cl.³)** |

EPA Form 1503.2  06.78